# EUROPEAN PATENT APPLICATION

(11) **EP 4 295 738 A1**
(43) Date of publication of application: **27.12.2023**
(21) Application number: 22931227.7
(22) Date of filing: 12.05.2022
(51) Int. Cl.: A47L 11/24

(54) **LOWER CASING ASSEMBLY AND CLEANING DEVICE**

(30) Priority: 16.03.2022 CN 202220579663 U
(71) Applicant: Beijing Hutt Wisdom Technology Co., Ltd., Xicheng District Beijing 100000 (CN)
(72) Inventor: LIU, Yue, Beijing 100035 (CN)
(74) Representative: Regimbeau
(86) International application number: PCT/CN2022/092400
(87) International publication number: WO 2023/173568

(57) **Abstract**

A lower shell assembly and a cleaning device are provided. The lower shell assembly (10) includes: a lower shell body (100), a first module (630), and a second module (640); the lower shell body (100) includes a bottom portion (600) and a side portion (610), the bottom portion (600) includes a first side (601) and a second side (602) which are opposite to each other, and the side portion (610) is arranged around the bottom portion (600) to form a cavity (603) on the first side (601) of the bottom portion (600); the first module (630) is installed on the second side (602) of the bottom portion (100); and the second module (640) is installed on the second side (602) of the lower shell body (100) and spaced apart from the first module (630), the first module (630) is configured to rotate around a rotating axis (678), the second module (640) is configured to rotate around an axis perpendicular to the rotating axis (678), and the rotating axis (678) extends in a direction from the first side (601) to the second side (602). The lower shell assembly and the cleaning device provided by the present disclosure can combine the cleaning effect with the moving speed of the cleaning device, and include a module capable of realizing fast and straight-line moving of the cleaning device and a module capable of cleaning by rotation. While ensuring the moving speed of the cleaning device, it significantly improves the cleaning efficiency of the cleaning device.

## Description

### CROSS-REFERENCE TO RELATED APPLICATION

The present application claims the priority of the Chinese patent application No. 202220579663.3 filed on March 16, 2022, the entire disclosure of which is incorporated herein by reference as part of the present application.

### TECHNICAL FIELD

At least one embodiment of the present disclosure relates to a lower shell assembly and a cleaning device.

### BACKGROUND

With the rapid development of modern technology, a concept of smart home gradually wins support among the people. Through networked comprehensive intelligent control and management, the smart home has gradually been able to realize a new "people-oriented" home life experience. Among them, all kinds of smart household appliances emerge in an endless stream, and cleaning devices used for household cleaning include a window cleaning robot and a floor sweeping robot. An adsorption device usually used in various cleaning devices is through vacuum adsorption, that is, a centrifugal fan or a vacuum pump is used as a vacuum generating device to generate a local negative pressure in a gap between the robot body and a surface to be cleaned. The robot attaches to the surface to be cleaned under a pressure difference, so that it can be used for surface cleaning, especially non-horizontal surface cleaning. In order to promote and improve cleaning performance of various cleaning devices, designing a solution that can increase a moving speed of the cleaning device while ensuring a cleaning effect has become a research direction for continuous improvement of a new generation of cleaning device.

### SUMMARY

The embodiments of the present disclosure provide a lower shell assembly and a cleaning device. The lower shell assembly and the cleaning device can combine the cleaning effect with the moving speed of the cleaning device, and include a module capable of realizing fast and straight-line moving of the cleaning device and a module capable of cleaning by rotation, while ensuring the moving speed of the cleaning device, significantly improving the cleaning efficiency of the cleaning device.

The embodiments of the present disclosure provide a lower shell assembly, including: a lower shell body, including a bottom portion and a side portion, the bottom portion including a first side and a second side which are opposite to each other, and the side portion being arranged around the bottom portion to form a cavity on the first side of the bottom portion; a first module, installed on the second side of the bottom portion; and a second module, installed on the second side of the bottom portion and spaced apart from the first module; the first module is configured to rotate around a rotating axis, the second module is configured to rotate around an axis perpendicular to the rotating axis, and the rotating axis extends in a direction from the first side to the second side.

For example, in the lower shell assembly provided by at least one embodiment of the present disclosure, the bottom portion includes a first installing portion and a second installing portion, the first installing portion is a part of the bottom portion corresponding to the first module, the second installing portion is a part of the bottom portion corresponding to the second module, the side portion has a connecting surface away from the bottom portion, and a distance between the first installing portion and the connecting surface is smaller than a distance between the second installing portion and the connecting surface so that a height difference is provided between the first installing portion and the second installing portion.

For example, the lower shell assembly provided by at least one embodiment of the present disclosure further includes a covering shell portion, the second module includes a cleaning frame and a walking component, and the bottom portion includes a first opening for installing the walking component and the covering shell portion, the covering shell portion is installed on the bottom portion and is configured to receive a part of the walking component, the cleaning frame has a second opening to avoid the walking component.

For example, in the lower shell assembly provided by at least one embodiment of the present disclosure, the cleaning frame is provided with double-layer ribs, and the bottom portion is provided with double-layer ribs, and the double-layer ribs on the cleaning frame are ring-shaped and form grooves therebetween, the double-layer ribs on the bottom portion are ring-shaped and form grooves therebetween, the double-layer ribs on the cleaning frame and the double-layer ribs on the bottom portion are arranged in a manner of inserting with each other, and the bottom portion has an extension guide portion on the second side, a height of the extension guide portion is smaller than a height of each of the double-layer ribs on the bottom portion so that a movement space is provided between the cleaning frame and the bottom portion and the cleaning frame has a movement amount in a height direction, the double-layer ribs on the bottom portion and the double-layer ribs on the cleaning frame provide guide on direction for movement of the cleaning frame in the height direction, the extension guide portion is located outside the double-layer ribs on the bottom portion, one of the double-layer ribs on the cleaning frame is arranged in the groove between the double-layer ribs on the bottom portion, and the other one of the double-layer ribs on the cleaning frame is arranged in a groove formed by the extension guide portion and a rib of the bottom portion close to the extension guide portion.

For example, in the lower shell assembly provided by at least one embodiment of the present disclosure, the bottom portion is further provided with a sealing rib on the second side, and the sealing rib is located inside the double-layer ribs on the bottom portion, the sealing rib and a rib of the double-layer ribs on the bottom portion close to the sealing rib form a receiving space for receiving a sealing member, and the height of the extension guide portion is smaller than a height of the sealing rib, the sealing member is configured to be compressible, a height of the sealing member is greater than the height of any one of the double-layer ribs, and is greater than the height of the sealing rib.

For example, in the lower shell assembly provided by at least one embodiment of the present disclosure, the bottom portion is provided with a position limiting column on the second side, the cleaning frame is provided with a position limiting hole, and the position limiting column is matched with the position limiting hole so that the cleaning frame is connected with the bottom portion by a fastener; the lower shell assembly further includes a middle cover, the middle cover is located on the first side of the bottom portion and is installed on the bottom portion, an air chamber is provided between the middle cover and the bottom portion, and the second installing portion of the bottom portion has an adsorption hole, and a matching position between the position limiting column and the position limiting hole is communicated with the air chamber through the adsorption hole, so that the matching position between the position limiting column and the position limiting hole serves as an air leakage detection hole; the lower shell assembly further includes a negative pressure mechanism, and the negative pressure mechanism includes at least one air chamber, an air inlet covering, at least one fan, and an air outlet covering, the air outlet covering includes at least two air outlet channels.

For example, in the lower shell assembly provided by at least one embodiment of the present disclosure, the air chamber includes a first sub-air chamber corresponding to the first module, a second sub-air chamber corresponding to the second module, and an electronic control valve configured to selectively control an opening area of the first sub-air chamber or the second sub-air chamber.

For example, in the lower shell assembly provided by at least one embodiment of the present disclosure, the air chamber includes a first sub-air chamber corresponding to the first module, a second sub-air chamber corresponding to the second module, a first electronic control valve, and a second electronic control valve, the first electronic control valve is configured to control the opening area of the first sub-air chamber; the second electronic control valve is configured to control the opening area of the second sub-air chamber.

For example, the lower shell assembly provided by at least one embodiment of the present disclosure further includes a wiper strip arranged at the front portion and/or rear portion of the walking component in a walking direction.

For example, in the lower shell assembly provided by at least one embodiment of the present disclosure, the walking component includes at least one roller, and a cleaning portion is provided on at least one side of the roller to clean dirt on the roller.

For example, in the lower shell assembly provided by at least one embodiment of the present disclosure, at least one sub- adsorption region is provided in the cleaning frame, each sub-adsorption region includes at least one sub-adsorption hole, sub-adsorption holes are spaced apart from each other, and a cross-section of each sub-adsorption hole is smaller than an opening cross-section of the second opening.

For example, in the lower shell assembly provided by at least one embodiment of the present disclosure, the first module and the second module are arranged side by side, and a rotation centerline of the first module is at a first symmetry plane of the second module, the first symmetry plane is a plane passing through a center of the second module in a direction perpendicular to a straight-line walking direction of the second module.

For example, the lower shell assembly provided by at least one embodiment of the present disclosure includes a plurality of first modules and a plurality of second modules, the plurality of first modules are spaced apart from each other, and the plurality of second modules are arranged side by side and arranged at intervals, and a rotation centerline of each first module does not overlap with a straight-line walking direction of each second module.

Embodiments of the present disclosure provides a cleaning device, including any one of the lower shell assemblies as described above.

For example, the cleaning device provided by at least one embodiment of the present disclosure further includes: at least one misstep switch, arranged on at least one end portion of the cleaning device, configured to detect moving position information of the cleaning device, and feed back the moving position information to the cleaning device, so as to control walking state of the cleaning device; and/or, at least one air leakage detection hole, arranged on at least one end portion of the cleaning device, configured to detect the moving position information of the cleaning device and feed back the moving position information to the cleaning device, so as to control the walking state of the cleaning device; a one-way portion, the one-way portion being unidirectional in an air outlet direction of the cleaning device; and a first cleaning member and a second cleaning member, the first cleaning member is connected with the first module and is arranged on a side of the first module away from the lower shell body, and the second cleaning member is connected with the second module and is arranged on a side of the second module away from the lower shell body.

### BRIEF DESCRIPTION OF DRAWINGS

FIG. 1A is a schematic diagram of an overall structure of a cleaning device provided by an embodiment of the present disclosure.
FIG. 1B is a schematic diagram of a partial structure of a cleaning device provided by an embodiment of the present disclosure.
FIG. 1C is a schematic structural diagram of an upper shell for a cleaning device provided by an embodiment of the present disclosure.
FIG. 1D is an overall schematic diagram of a cleaning device provided by an embodiment of the present disclosure.
FIG. 2 is a cross-sectional view of the cleaning device in FIG. 1B along line A-A.
FIG. 3A is a schematic structural diagram of a lower shell body in a lower shell assembly provided by an embodiment of the present disclosure.
FIG. 3B is a structural schematic diagram of another viewing angle of the lower shell body in the lower shell assembly provided by an embodiment of the present disclosure.
FIG. 4 is a partially enlarged schematic diagram of a second module in the cleaning device in FIG. 2.
FIG. 5A is a cross-sectional view of the cleaning device in FIG. 1D along line B-B.
FIG. 5B is a schematic diagram of a flow path of airflow in a cleaning device provided by an embodiment of the present disclosure.
FIG. 6 is a partial cross-sectional view of a connection position between an auxiliary control board and a middle cover provided by an embodiment of the present disclosure.
FIG. 7 is a partial structural diagram of a second module in the cleaning device in FIG. 1D.
FIG. 8A is a schematic diagram of relative position of a first module and a second module in a cleaning device provided by an embodiment of the present disclosure.
FIG. 8B is another schematic diagram of relative position of a first module and a second module in a cleaning device provided by an embodiment of the present disclosure.
FIG. 8C is another schematic diagram of relative position of a first module and a second module in a cleaning device provided by an embodiment of the present disclosure.
FIG. 9A is a schematic diagram of a water outlet range of a nozzle and an air outlet range of an air outlet opening in a cleaning device provided by an embodiment of the present disclosure.
FIG. 9B is a schematic diagram of an air outlet opening provided by an embodiment of the present disclosure.

### DETAILED DESCRIPTION

In order to make objectives, technical details and advantages of the embodiments of the present disclosure more clear, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. Also, the terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the described object is changed, the relative position relationship may be changed accordingly.

The components or structures in the drawings are not drawn strictly to scale, and the dimensions of the components or structures may be exaggerated or reduced for the sake of clarity, but these should not be used to limit the scope of the present disclosure. In order to keep the following description of the embodiments of the present disclosure clear and concise, detailed descriptions of known functions and known components may be omitted.

With the continuous advancement of modern technology, the concept of smart home has become a fashion trend, and various cleaning devices suitable for smart cleaning emerge in an endless stream. In this regard, inventor(s) of the present disclosure found that a cleaning device (such as a window cleaning machine, a floor sweeping robot and so on) can be roughly divided into two types, one type is a combination mode of double wheels for moving in a twisting way, that is one of the double wheels rotates relative to a surface to be cleaned, thereby playing a function of wiping, while the other one of the double wheels is relatively stationary to the surface to be cleaned and rotates with a slow rotation speed so as to drive the wheel for wiping rotates around it, until a next cycle, and in the next circle, the relatively stationary wheel switches role with the wheel for wiping, so that the cleaning device twists and moves. Another type of the cleaning device adopts a combination mode of double crawler belts for moving, a wiping cloth can be fixed around the double crawler belt, during a moving process, the wiping cloth slides relative to the surface to be cleaned to wipe it.

However, for the combination mode of double wheels for moving in a twisting way, the moving speed of the cleaning device is slow, and cleaning efficiency is low during continuous switching processes of the double wheels; and the combination mode of double crawler belts for moving cleans with the wiping cloth fixed around the crawler belt, and has lower cleaning efficiency than the mode of wiping with a rotating wiping wheel in contact with the surface to be cleaned, thereby causing that, usually, the surface to be cleaned cannot be completely cleaned, and the cleaning effect is not good.

Embodiments of the present disclosure provide a lower shell assembly and a cleaning device. The lower shell assembly includes: a lower shell body, a first module, and a second module, the lower shell body includes a bottom portion and a side portion, the bottom portion includes a first side and a second side which are opposite to each other, and the side portion is arranged around the bottom portion to form a cavity on the first side of the bottom portion; the first module is installed on the second side of the bottom portion; the second module is installed on the second side of the bottom portion and is spaced apart from the first module, the first module is configured to rotate around a rotating axis, the second module is configured to rotate around an axis perpendicular to the rotating axis, and the rotating axis extends in a direction from the first side to the second side.

The lower shell assembly and the cleaning device provided by at least one embodiment of the present disclosure can combine the cleaning effect with the moving speed of the cleaning device, and include a module capable of realizing fast and straight-line moving of the cleaning device and a module capable of cleaning by rotation, while ensuring the moving speed of the cleaning device, significantly improving the cleaning efficiency of the cleaning device, so that the cleaning device has good cleaning performance.

The lower shell assembly and the cleaning device will be described below through some embodiments.

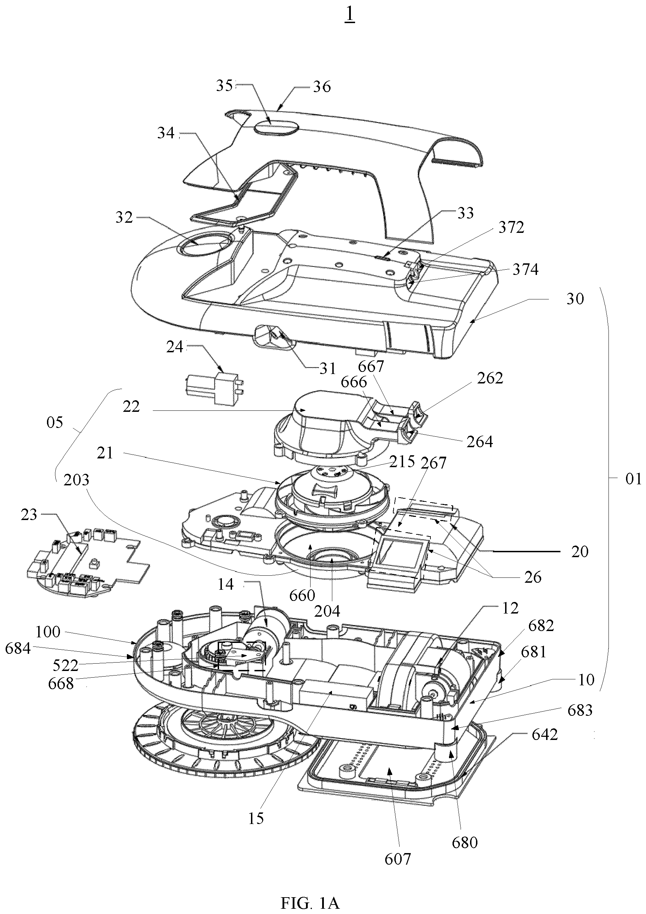

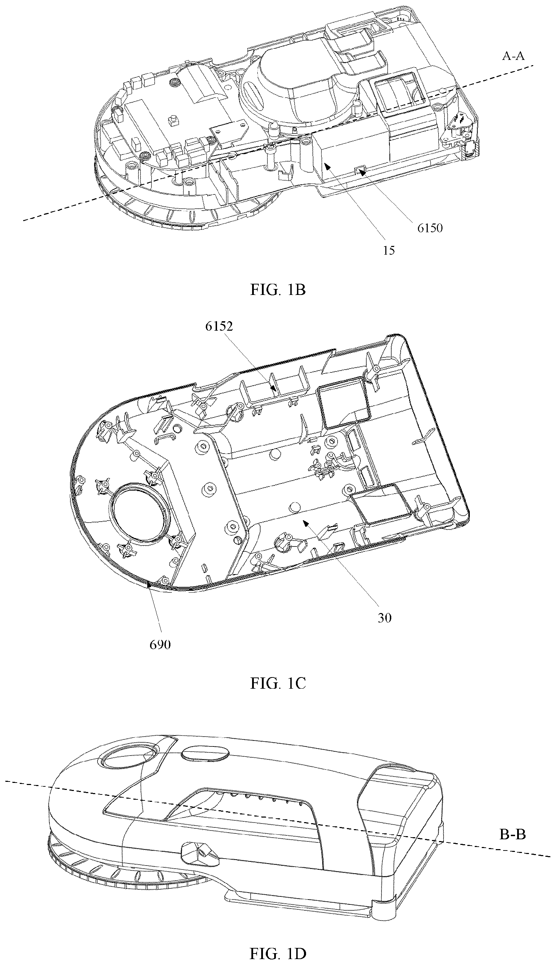

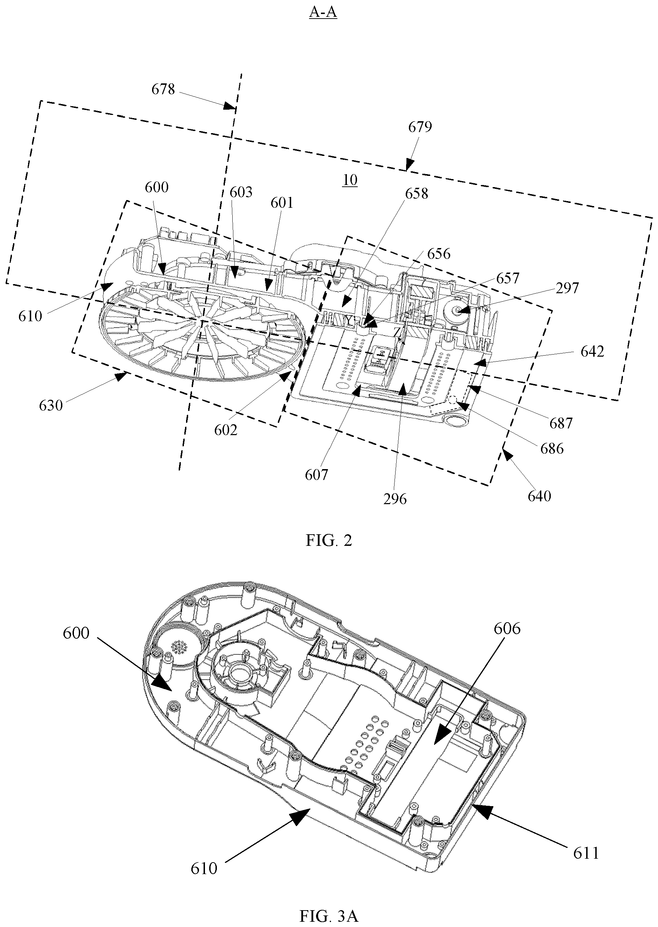

FIG. 1A is a schematic diagram of an overall structure of a cleaning device provided by an embodiment of the present disclosure. FIG. 1B is a schematic diagram of a partial structure of a cleaning device provided by an embodiment of the present disclosure. FIG. 1C is a schematic structural diagram of an upper shell for a cleaning device provided by an embodiment of the present disclosure. FIG. 1D is an overall schematic diagram of a cleaning device provided by an embodiment of the present disclosure. FIG. 2 is a cross-sectional view of the cleaning device in FIG. 1B along line A-A.

Referring to FIG. 1A and FIG. 2, the cleaning device 1 includes a shell assembly 01, the shell assembly 01 includes a lower shell assembly 10, a middle cover 20, and an upper shell 30. The lower shell assembly 10 includes: a lower shell body 100, a first module 630 and a second module 640, the lower shell body 100 includes a bottom portion 600 and a side portion 610, the bottom portion 600 includes a first side 601 and a second side 602 which are opposite to each other, the side portion 610 is arranged around the bottom portion 600 to form a cavity 603 on the first side 601 of the bottom portion 600; the first module 630 and the second module 640 are installed on the second side 602 of the bottom portion 600, and the second module 640 and the first module 630 are spaced apart from each other, the first module 630 are configured to rotate around a rotating axis 678, the second module 640 is configured to rotate around an axis perpendicular to the rotating axis 678, and the rotating axis 678 extends in a direction from the first side 601 to the second side 602. For example, the first module 630 can rotate around the rotating axis 678 relative to the bottom portion 600. For example, the second module 640 can drive the cleaning device 1 separately to move linearly.

Referring to FIG. 1A and FIG. 2, various matching and installation structures can be provided on the first side 601 of the lower shell body 100 to meet installation and matching of various components in the cleaning device 1. For example, various types of components in the cleaning device 1 can be arranged in the cavity 603 to realize corresponding device functions. For example, the various types of components may include a driving motor 14, a battery pack 15, a main control board 23 and a driver 24. For example, the main control board 23 is provided with a control module, and the control module is configured to drive the cleaning device 1; the driver 24 may sever as a drive control element of the cleaning device 1; the upper shell 30 may further be provided with a nozzle 31, a button 32, an indicator light 33, and a decoration member 36, and the decoration member 36 includes a water tank rubber plug 35 and a water tank bottom shell 34. The lower shell assembly 10 further includes a covering shell portion 12 which is detachably connected with the lower shell body 100 along its periphery. For example, a walking component 296 of the cleaning device 1 or a driving component 297 of the walking component 296 may be provided in the covering shell portion 12.

Referring to FIG. 1A and FIG. 2, the first module 630 is configured to rotate around the rotating axis 678, the second module 640 is configured to rotate around an axis perpendicular to the rotating axis 678, and the first module 630 and the second module 640 cooperates with each other to realize straight-line walking and turning of the cleaning device 1, and the first module 630 can perform cleaning by rotating, that is, while ensuring the moving speed of the cleaning device 1, the cleaning efficiency of the cleaning device 1 is significantly improved, so that the cleaning device 1 has good cleaning performance.

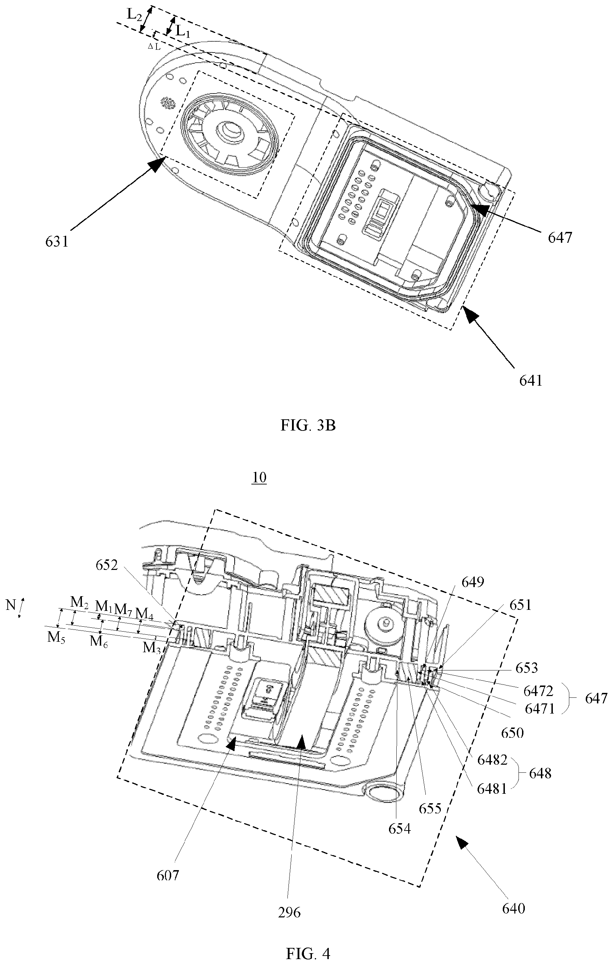

FIG. 3A is a schematic structural diagram of a lower shell body in a lower shell assembly provided by an embodiment of the present disclosure. FIG. 3B is a structural schematic diagram of another viewing angle of the lower shell body in the lower shell assembly provided by an embodiment of the present disclosure.

Referring to FIG. 2, FIG. 3A and FIG. 3B, the bottom portion 600 includes a first installing portion 631 and a second installing portion 641, the first installing portion 631 is a part of the bottom portion 600 corresponding to the first module 630, and the second installing portion 641 is a part of the bottom portion 600 corresponding to the second module 640, the side portion 610 has a connecting surface 611 away from the bottom portion 600, a distance L1 between the first installing portion 631 and the connecting surface 611 is smaller than a distance L2 between the second installing portion 641 and the connecting surface 611 so that a height difference ΔL is provided between the first installing portion 631 and the second installing portion 641.

For example, the first module 630 can be installed on the first installing portion 631 through a fastener, and at the same time, the first module 630 is enabled to rotate relative to the cleaning device 1. For example, in some embodiments of the present disclosure, the first installing portion 631 may include a rotating connection shaft, and the first module 630 may be fixed on the rotating connection shaft from a center position, and may rotate along with the rotating connection shaft. For example, the fastener may be a bolt, or any other element capable of fixing the first module 630 on the first installing portion 631 and making the first module 630 rotating, which is not limited in the embodiments of the present disclosure.

For example, the second module 640 can be connected with the second installing portion 641 by clamping, or plugging or the like, and can move along with the cleaning device. The present disclosure does not limit a connection manner of the second module 640 and the second installing portion 641.

Referring to FIG. 2, FIG. 1C, FIG. 3A and FIG. 3B, the connecting surface 611 is located on a side of the side portion 610 away from the bottom portion 600, the connecting surface 611 can achieve an opposite arrangement, a match, and a contact with the upper shell 30, so that a jointing surface 690 of the upper shell 30 coincides with the connecting surface 611, which provides cover and protection for the components in the cleaning device 1.

For example, in a case where the distance L1 between the first installing portion 631 and the connecting surface 611 is smaller than the distance L2 between the second installing portion 641 and the connecting surface 611, and a height difference ΔL is provided between the first installing portion 631 and the second installing portion 641, the second installing portion 641 is closer to the surface to be cleaned than the first installing portion 631, and in a case where a distance between the walking component 296 and the surface to be cleaned is constant, a height Z that the second installing portion 641 exposes the walking component can be relatively reduced. After the second module 640 is installed on the second installing portion 641 by avoiding structure of the walking component 296, an exposed surface of the walking component 296 can be further shielded. Furthermore, in a case where the second module 640 is provided with a cleaning member such as a cleaning cloth, the cleaning cloth can wrap the second module 640 to further reduce exposed part of the walking component 296, which makes the bottom portion of the cleaning device 1 more beautiful.

Referring to FIG. 1A, FIG. 2 and FIG. 3A, the lower shell assembly 10 further includes the covering shell portion 12, the second module 640 includes a cleaning frame 642 and the walking component 296, and the bottom portion 600 includes a first opening 606 to install the walking component 296 and the covering shell portion 12, the covering shell portion 12 is installed on the bottom portion 600 and is configured to receive a part of the walking component 296, and the cleaning frame 642 has a second opening 607 to avoid the walking component 296.

For example, the covering shell portion 12 can be fixed on the first side 601 of the bottom portion 600 by a fixing member, for example, can be fixedly connected by a bolt, or any other suitable way to realize a fixed connection, which is not limited in the present disclosure. For example, a part of the walking component 296 and the driving component 297 of the walking component 296 can be received in the covering shell portion 12, a part of the walking component 296 is arranged on the first side 601 of the bottom portion 600, and the other part protrudes to the second side 602 of the bottom portion 600 through the first opening 606. The driving component 297 is arranged on the first side 601 of the bottom portion 600, is adjacent to the walking component 296, and is configured to drive the walking component 296 to drive the cleaning device 1 in a walking direction.

For example, an opening area of the second opening 607 in the cleaning frame 642 is larger than an opening area of the first opening 606 in the bottom portion 600. The second opening 607 can provide an avoiding space for the walking component 296, so that the walking component 296 can rotate on the surface to be cleaned; in addition, the second opening 607 can further provide an air suction inlet opening for the cleaning device 1, which allows airflow to be sucked in from the bottom portion of the cleaning device 1 through the second opening 607.

FIG. 4 is a partially enlarged schematic diagram of a second module in the cleaning device in FIG. 2.

Referring to FIG. 2, FIG. 3B and FIG. 4, the cleaning frame 642 is provided with double-layer ribs 648, and the bottom portion 600 is provided with double-layer ribs 647, and the double-layer ribs 648 on the cleaning frame 642 are ring-shaped and form a groove 650 therebetween, the double-layer ribs 647 on the bottom portion 600 are ring-shaped and form a groove 649 therebetween, the double-layer ribs 648 on the cleaning frame 642 and the double-layer ribs 647 on the bottom portion 600 are arranged in a manner of inserting with each other. For example, the cleaning frame 642 and the bottom portion 600 are arranged through the double-layer ribs 648 and the double-layer ribs 647 in the manner of inserting with each other, which can prevent the cleaning frame 642 from moving in a direction perpendicular to a direction N relative to the bottom portion 600, prevent the cleaning frame 642 from shaking, and then prevent affecting control effect of the cleaning device. The direction N is a direction perpendicular to an extending direction of the double-layer ribs 647 or the double-layer ribs 648.

For example, a number of the ribs on the cleaning frame 642 and a number of the ribs on the bottom portion 600 for inserting and fitting may be the same or different, which is not limited in the present disclosure. Moreover, the present disclosure does not limit the number of ribs on the cleaning frame 642 and the number of ribs on the bottom portion 600 for inserting and fitting. For example, the cleaning frame 642 can have one rib, and the bottom portion 600 can have two ribs, which can realize the inserting and fitting. For example, the cleaning frame 642 and the bottom portion 600 can both have a plurality of ribs, thereby increasing strength for an inserting and fitting position.

Referring to FIG. 2 and FIG. 4, the bottom portion 600 of the lower shell assembly 10 has an extension guide portion 651 on the second side 602, a height of the extension guide portion 651 is M1, and a height of each rib in the double-layer ribs 647 is M2, and the height M1 of the extension guide portion 651 is less than the height M2 of each rib in the double-layer ribs 647 on the bottom portion 600, so that a movement space 652 is provided between the cleaning frame 642 and the bottom portion 600, and the cleaning frame 642 has a movement amount M3 in the height direction N, the double-layer ribs 647 on the bottom portion 600 and the double-layer ribs 648 on the cleaning frame 642 provide guide on direction for movement of the cleaning frame 642 in the height direction. The height direction N is an extending direction of the double-layer ribs 647 or the double-layer ribs 648, and the height of each rib is the height in the height direction N.

For example, the cleaning frame 642 has a movement amount M3 in the height direction N, which can reduce assembly error of the cleaning device 1 and matching error with the surface to be cleaned. In a case where the cleaning device 1 performs cleaning, a distance between a matching surface of the first module 630 and the surface to be cleaned needs be consistent with a distance between a matching surface of the second module 640 and the surface to be cleaned, that is, no height difference is provided between the two matching surfaces, so as to ensure that the first module 630 and the second module 640 can be in sufficiently contact with the surface to be cleaned, respectively. Therefore, in a case where the assembly error or member design error exists in the cleaning device 1, which results in a distance between the matching surface of the first module 630 and the surface to be cleaned is different from a distance between the matching surface of the second module 640 and the surface to be cleaned, the cleaning frame 642 can move in the movement space 652 in the direction N through the double-layer ribs 648. For example, a value of the movement amount M3 may be determined according to actual design requirements, which is not limited in the present disclosure.

Referring to FIG. 2 and FIG. 4, the extension guide portion 651 of the lower shell assembly 10 is located outside the double-layer ribs 647 on the bottom portion 600, and the double-layer ribs 648 on the cleaning frame 642 includes a rib 6481 and a rib 6482, the rib 6481 is arranged in a groove 649 between the double-layer ribs 647 of the bottom portion 600, and the rib 6482 in the double-layer ribs 648 on the cleaning frame 642 is arranged in a groove 653 formed by the extension guide portion 651 and a rib 6472 of the bottom portion 600 close to the extension guide portion 651.

For example, an extension direction of the extension guide portion 651 is consistent with an extension direction of the double-layer ribs 647 or the double-layer ribs 648, so as to provide guide on direction for the cleaning frame 642 when moving in the movement space 652 through the double-layer ribs 648, and prevent the cleaning frame 642 from moving in a direction perpendicular to the direction N, which is beneficial to improving an adsorption effect.

Referring to FIG. 2 and FIG. 4, the bottom portion 600 is further provided with a sealing rib 654 on the second side 602, and the sealing rib 654 is located inside the double-layer ribs 647 on the bottom portion 600, the sealing rib 654 and the rib 6471 of the double-layer ribs 647 on the bottom portion 600 close to the sealing rib 654 form a receiving space for receiving a sealing member 655, and the height M1 of the extension guide portion 651 is smaller than a height M4 of the sealing rib 654.

Referring to FIG. 2 and FIG. 4, the sealing member 655 is configured to be compressible, a height M5 of the sealing member 655 is greater than the height of any one of the double-layer ribs 647 and the double-layer ribs 648, and is greater than the height M4 of the sealing rib 654.

For example, an arrangement of the sealing member 655 can prevent the airflow inhaled from the second opening 607 from leaking from a matching gap between the double-layer ribs 647 and the double-layer ribs 648, and play a sealing role to ensure an adsorption strength of the cleaning device 1. Meanwhile, the height M5 of the sealing member 655 is greater than the height of any one of the double-layer ribs 647 and the double-layer ribs 648, that is, the height M5 of the sealing member 655 is greater than the height M2 of the double-layer ribs 647, the height M6 of the double-layer rib 648, and the height M4 of the sealing rib 654, which can ensure that the cleaning frame 642 has the movement amount M3 in the height direction N. In addition, the arrangement of the sealing member 655 can provide a moving buffer for the cleaning frame 642 in a case where the cleaning frame 642 moves in a direction towards to the bottom portion 600, which prevent the cleaning frame 642 from impacting or wearing in a case where it moves relative to the bottom portion 600, which may damage the components.

For example, the sealing member 655 can use foam and any material that can be squeezed and for sealing, and the present disclosure is not limited thereto.

As shown in FIG. 2, the bottom portion 600 is provided with a position limiting column 656 on the second side 602, the cleaning frame 642 is provided with a position limiting hole 657, and the position limiting column 656 is matched with the position limiting hole 657 so that the cleaning frame 642 is connected with the bottom portion 600 by a fastener. For example, the fastener can be arranged on the position limiting column 656, and no connection exists between the fastener and the position limiting hole 657, and the cleaning frame 642 is clamped on the bottom portion 600 by the fastener under a position limiting action of the fastener, so that it will not fall off in a direction away from the bottom portion 600. At the same time, after the fastener is arranged on the position limiting column 656, the cleaning frame 642 can be displaced at the position limiting hole 657, and a displacement stroke can be Y. For example, the displacement stroke Y may be the same as the movement amount M3 of the cleaning frame 642. For example, the fastener may be a bolt, or any part that can meet the above assembly requirements, and the present disclosure is not limited thereto.

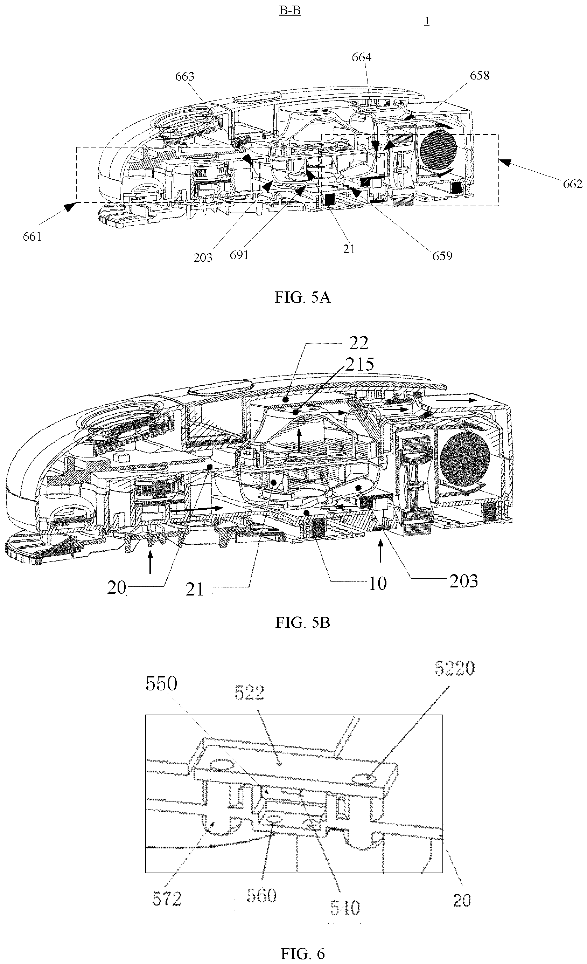

FIG. 5A is a cross-sectional view of the cleaning device in FIG. 1D along line B-B.

Referring to FIG. 1A, FIG. 2 and FIG. 5A, the lower shell assembly 10 further includes a middle cover 20, the middle cover 20 is located on the first side 601 of the bottom portion 600, and is installed on the bottom portion 600, and an air chamber 658 is provided between the middle cover 20 and the bottom portion 600, and the second installing portion 642 of the bottom portion 600 has an adsorption hole 659, and a matching position between the position limiting column 656 and the position limiting hole 657 is communicated with the air chamber 658 through the adsorption hole 659, so that the matching position between the position limiting column 656 and the position limiting hole 657 serves as an air leakage hole. For example, a size of the fastener should meet the requirement that a certain gap is provided after the matching of the position limiting column 656 and the position limiting hole 657, so that the airflow can flow through the gap.

Referring to FIG. 1A and FIG. 5A, the lower shell assembly 10 further includes a fan 21 and an air outlet covering 22, the middle cover 20 is provided with a recessed portion 660, and an air inlet opening 204 is arranged in the recessed portion 660, and the fan 21 is located between the air outlet covering 22 and the recessed portion 660 of the middle cover 20, the air outlet covering 22 is in sealing connection with periphery of the recessed portion 660 of the middle cover 20, and a space between the lower shell body 100 and the middle cover 20 forms the air chamber 658.

For example, when the fan 21 is operating, air entering from the air inlet opening 204 will be directly discharged from the air outlet covering 22 because of sealing structure between the air outlet covering 22 and the recessed portion 660 of the middle cover 20, so as to avoid gas leakage and ensure the adsorption effect.

For example, a matching gap is provided between the position limiting column 656 and the position limiting hole 657, so that the air can flow into a side of the cleaning frame 642 close to the bottom portion 600 through the gap, and then enter the air chamber 658 through the adsorption hole 659, so that an air pressure of the air chamber 658 is changed. For example, in a case where the cleaning device 1 moves into a region outside a cleaning region, for example, a part of the cleaning device 1 is separated from the surface to be cleaned, the gap between the position limiting column 656 and the position limiting hole 657 can be used as an air leakage hole to change the air pressure of the air chamber 658, so that the cleaning device 1 performs corresponding control operations.

For example, at least one air leakage detection hole can further be directly arranged in other positions in the cleaning device 1, for example, it can be arranged at an edge position of the second module, so that it is easier to detect a movement state of the cleaning device 1, so as to timely and sensitively play a prompting role for the cleaning device 1.

Referring to FIG. 2 and FIG. 5A, the air chamber 658 includes a first sub-air chamber 661 corresponding to the first module 630, a second sub-air chamber 662 corresponding to the second module 640, a first electronic control valve 663, and a second electronic control valve 664, the first electronic control valve 663 is configured to control opening and closing of the first sub-air chamber 661, and adjust an opening area of the first sub-air chamber 661; the second electronic control valve 664 is configured to control opening and closing of the second sub-air chamber 662, and adjust an opening area of the second sub-air chamber 662.

Referring to FIG. 1A and FIG. 5A, the lower shell assembly 10 includes a negative pressure mechanism 05, and the negative pressure mechanism 05 includes at least one air chamber 658, an air inlet covering 203, at least one fan 21, and an air outlet covering 22, and the air outlet covering 22 includes at least two air outlet channels, that is, an air outlet channel 666 and an air outlet channel 667.

Referring to FIG. 1A, the upper shell 30 in the cleaning device 1 includes an air outlet opening 372 and an air outlet opening 374, the air outlet covering 22 includes a guide end 262 and a guide end 264, and the guide end 262 and the guide end 264 are located above a surface 267 of a contour portion 26 of the middle cover 20 close to the upper shell 30, and the guide end 262 is communicated with the air outlet opening 372, and the guide end 264 is communicated with the air outlet opening 374, so that the airflow passing through the air outlet covering 22 can be discharged from the air outlet opening 372 and the air outlet opening 374.

FIG. 5B is a schematic diagram of a flow path of airflow in a cleaning device provided by an embodiment of the present disclosure.

Referring to FIG. 1A and FIG. 5B, a main airflow path in the cleaning device 1 includes that: the fan 21 operates, and the airflow enters the fan 21 from the bottom portion of the cleaning device 1 from the air inlet opening 204 of the air inlet covering 203; the fan 21 includes a plurality of air flowing holes 215, the airflow entering the air inlet covering 203 flows through the fan 21 to the air outlet covering 22 in a direction away from the lower shell assembly 10 of the cleaning device 1; finally, the airflow can flows out through the guide end 262 and the guide end 264 of the air outlet covering 22, and is discharged from the cleaning device 1 through the air outlet opening 372 and the air outlet opening 374.

Referring to FIG. 2 and FIG. 5A, the first electronic control valve 663 is arranged at an air inlet channel of the first sub-air chamber 661, and the second electronic control valve 664 is arranged at an air inlet channel of the second sub-air chamber 662. For example, the first electronic control valve 663 and the second electronic control valve 664 can be regulated separately, that is, the two electronic control valves can be selectively opened and closed, and can be can be asynchronously controlled. By arranging the first electronic control valve 663 and the second electronic control valve 664, an opening size of the first sub-air chamber 661 corresponding to the first module 630 and an opening size of the second sub-air chamber 662 corresponding to the second module 640 can further be adjusted, and an air inlet amount can be adjusted, so that a pressure between the first module 630 and the surface to be cleaned is different from a pressure between the second module 640 and the surface to be cleaned, so as to better control the movement of the cleaning device 1.

For example, in some embodiments, the negative pressure mechanism 05 can further be in a plurality of combinations such as a combination of double fans, single air chamber, and double air outlet channels, or a combination of double fans, double air chambers, and double air outlet channels, the present disclosure does not limit a number and a design form of the air chamber 658, the air inlet covering 203, the fan 21, and the air outlet covering 22.

The cleaning device 1 can be used for surface cleaning in various situations. For example, for cleaning on a horizontal surface, the negative pressure mechanism 05 can increase a pressure between the cleaning device 1 and the horizontal surface, increase a frictional force, and improve the cleaning effect. For cleaning on a non-horizontal surface, the negative pressure mechanism 05 can make the cleaning device 1 adsorb on the non-horizontal surface.

In some exemplary embodiments, the cleaning device 1 is a window cleaning robot, and the surface to be cleaned includes a window or a wall. For example, the window may be a framed window or a frameless window. For example, the framed window could be a home window, the frameless window could be a large floor-to-ceiling window.

FIG. 6 is a partial cross-sectional view of a connection position between an auxiliary control board and a middle cover provided by an embodiment of the present disclosure.

Referring to FIG. 1A, FIG. 5A and FIG. 6, a pressure sensor 668 is arranged in the air chamber 658 and is configured to detect the air pressure in the air chamber 658. As shown in FIG. 6, the cleaning device 1 further includes a detection chamber 550, and the detection chamber 550 is communicated with the air chamber 658. The detection chamber 550 and the air chamber 658 form a sealing chamber. The detection chamber 550 is located between the auxiliary control board 522 and the middle cover 20, and the middle cover 20 is provided with at least one detection hole 560, and the detection chamber 550 is communicated with the air chamber 500 through the detection hole 560. The detection hole 560 can play a role of balancing an air pressure between the air chamber 500 and the detection chamber 550. In addition, the detection hole 560 can further reduce water and vapor in the air chamber from contacting the air pressure sensor 540, avoid unstable operation of the air pressure sensor 540, and ensure an accuracy of air pressure detection.

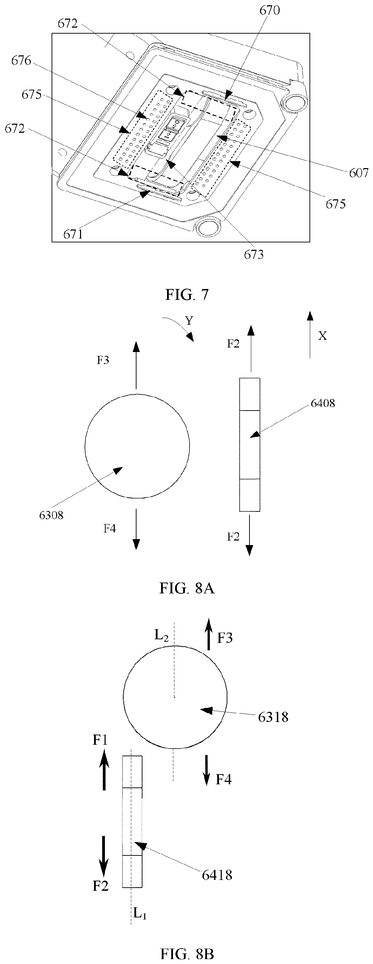

FIG. 7 is a partial structural diagram of a second module in the cleaning device in FIG. 1D.

Referring to FIG. 1A, FIG. 2 and FIG. 7, wiper strips, namely a wiper strip 670 and a wiper strip 671, are provided at the front and rear of the walking component 296 in the walking direction. For example, when the second module 640 in the cleaning device 1 moves with the walking component 296, by arranging the wiper strip 670 and the wiper strip 671, dirt, such as water and so on, on the walking component 296 in a walking direction can be scraped off, so as to avoid slipping of the walking component 296 in a case where too much water exists, which affects the adsorption effect of the cleaning device 1. For example, in a case where the cleaning device 1 is a window cleaning machine, the wiper strip 670 and the wiper strip 671 can prevent the window cleaning machine from slipping and falling.

For example, a number and form of the wiper strip 670 or the wiper strip 671 may be determined according to actual product design requirements, which are not limited in the present disclosure.

Referring to FIG. 2 and FIG. 7, the walking component 296 includes at least one roller 673, and a cleaning portion 672 is provided on at least one side of the roller 673 to clean dirt on the roller. For example, one or more rollers can further be arranged in the walking component 296 to meet different product design requirements. By arranging the cleaning portion 672, the walking component 296 can be cleaned, and the walking component 296 can be guaranteed to move normally and smoothly in the walking direction without stagnation.

For example, two cleaning portions 672 can be arranged, and the cleaning portions 672 can be arranged at two opposite ends of the walking component 296 in the walking direction, or can be determined according to actual design requirements, the present disclosure does not limit a position of the cleaning portion 672.

For example, in some embodiments of the present disclosure, the cleaning portion 672 may be a cleaning brush; or, the cleaning portion 672 may further be any other member capable of cleaning the walking component 296, which is not limited in the present disclosure.

For example, in some embodiments of the present disclosure, the walking component 296 may be a track wheel set, and the cleaning portion 672 may further be configured to clean impurities on the track and the track wheels. For example, in a case where the walking component 296 is a track wheel set, a number of the track wheel set may not be limited to one, that is, may be increased to several according to design requirements, so as to increase a cleaning area and cleaning power of the cleaning device.

Referring to FIG. 2 and FIG. 7, the cleaning frame 642 is provided with at least one sub-adsorption region 675, each sub-adsorption region 675 includes at least one sub-adsorption hole 676, and the sub-adsorption holes 676 are spaced apart from each other, a cross-section of each of the at least one sub-adsorption holes 676 is smaller than an opening cross-section of the second opening 607. As shown in FIG. 7, two sub-adsorption regions 675 are provided, and the two sub-adsorption regions 675 are arranged on both sides of the second opening 607.

Referring to FIG. 1A, FIG. 2, FIG. 5A and FIG. 7, under an action of the negative pressure mechanism 05, the airflow can enter into a side of the cleaning frame 642 close to the fan 21 from the second opening 607, and then enters into the air chamber 658 by passing through the adsorption hole 659 of the second installing portion 641. At the same time, the airflow can further enter into a side of the cleaning frame 642 close to the fan 21 from the sub-adsorption region 675 through the sub-adsorption hole 676, and then enter into the air chamber 658. For example, an opening region of the second opening 607 can serve as a main adsorption region of the cleaning device 1. A design method of combining the main adsorption region and the sub-adsorption region can increase an area of a negative pressure chamber in the cleaning device 1 and improve the adsorption effect. For example, in a case where one sub-adsorption hole 676 is arranged, it is convenient for processing and manufacturing, and a cost can be reduced; in a case where a plurality of sub-adsorption holes 676 are arranged, it is beneficial to ensuring that the air inlet amount of the cleaning frame 642 is enlarged, thereby ensuring a strength of the cleaning frame during an adsorption process and reducing damage and deformation, the present disclosure does not limit a number of the sub-adsorption hole 676.

For example, in some embodiments of the present disclosure, numbers and positional relationship of the first module 630 and the second module 640 in the cleaning device 1 may include various types.

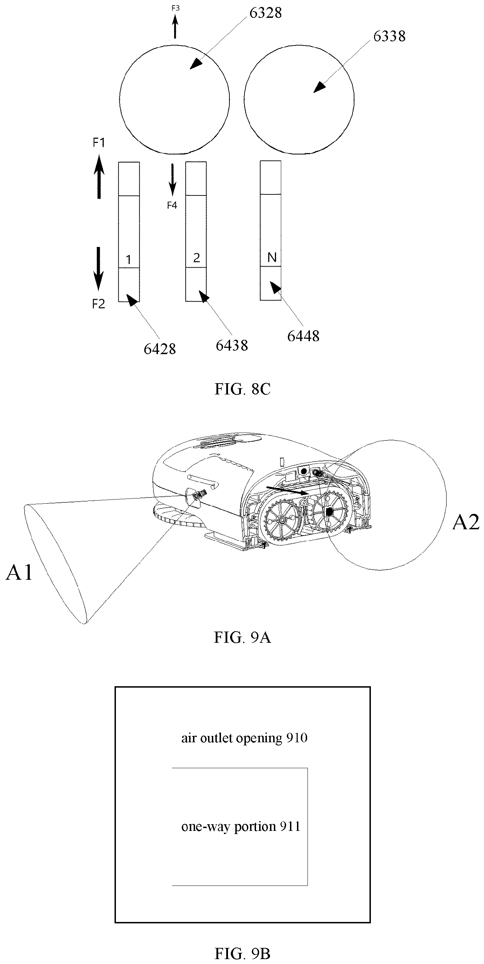

FIG. 8A is a schematic diagram of relative position of a first module and a second module in a cleaning device provided by an embodiment of the present disclosure. FIG. 8B is another schematic diagram of relative position of a first module and a second module in a cleaning device provided by an embodiment of the present disclosure. FIG. 8C is another schematic diagram of relative position of a first module and a second module in a cleaning device provided by an embodiment of the present disclosure.

Referring to FIG. 2 and FIG. 8A, the first module 630 and the second module 640 are arranged side by side, and the rotating axis 678 of the first module 630 is in a first symmetry plane 679 of the second module 640, the first symmetry plane 679 is a plane passing through a center of the second module 640 in a direction perpendicular to a straight-line walking direction of the second module 640. The second module 640 is structurally symmetrical with respect to the first symmetry plane 679.

A relative positional relationship between the first module 630 and the second module 640 in FIG. 2 is the same as that in FIG. 8A.

As shown in FIG. 8A, a first module 6308 and a second module 6408 are arranged side by side, the first module 6308 can rotate in a direction Y or in an opposite direction of the direction Y, and the second module 6408 can move in a straight line in a direction X or in an opposite direction of the direction X.

For example, in a case where the first module 6308 rotates in the direction Y under an action of the driving element (for example, the driving element may be the same as the driving motor 14 shown in FIG. 1A), a corresponding force of the first module 6308 is F4; and in a case where the first module 6308 rotates in an opposite direction of the direction Y, the force corresponding to the first module 6308 is F3. For example, in a case where the second module 6408 moves in the direction X, a driving force that should be applied to the second module 6408 is F1, and in a case where the second module 6408 moves in an opposite direction of the direction X, the driving force that should be applied to the second module 6408 is F2.

For example, one of the first module 6308 and the second module 6408 can be used as a driving wheel set. In a case where the first module 6308 is used as a driving wheel set, the driving force received by the first module 6308 can be constant, by adjusting a size of the driving force F1 or the driving force F2 received by the second module 6408, the second module 6408 cooperates with the first module 6308 to realize a movement of the cleaning device such as moving forward, moving backward and turning. Similarly, the second module 6408 can further be used as a driving wheel set so that the driving force received by the second module 6408 can be constant, and the movement state of the cleaning device can be controlled by adjusting the driving force to the first module 6308.

For example, referring to FIG. 2, in some embodiments of the present disclosure, the lower shell assembly 10 may include a plurality of first modules 630 and a plurality of second modules 640, and the plurality of first modules 630 are spaced apart from each other, and the plurality of the second modules 640 are arranged side by side and arranged at intervals, and a rotation centerline of each first module does not overlap with a linear movement direction of each second module.

As shown in FIG. 8B, the cleaning device may include a first module 6318 and a second module 6418, which are arranged side by side and arranged at intervals, and a rotation centerline L2 of the first module 6318 does not overlap with a linear movement direction L1 of the second module 6418, so as to ensure that the first module 6318 and the second module 6418 can cooperate with each other and move together.

Further, a plurality of first modules 630 and a plurality of second modules 640 can be arranged in the cleaning device. As shown in FIG. 8C, the lower shell assembly may include a first module 6328, a first module 6338, a second module 6428, a second module 6438, and a second module 6448, and the first module 6328 and the first module 6338 are arranged side by side and arranged at intervals, and the second module group 6428, the second module group 6438, and the second module group 6448 are arranged side by side and arranged at intervals, and a rotation centerline of each first module does not overlap with a linear movement direction of each second module. For example, the first module 6328 and the first module 6338 may further be arranged in a non- side-by-side manner.

By changing a number of at least one first module, a number of at least one second module and relative position of the at least one first module and the at least one second module, a design form of an actual product can be more diversified, which further improves an overall performance of the cleaning device.

The present disclosure further provides a cleaning device, including any one of the above-mentioned lower shell assemblies.

For example, the cleaning device provided by the embodiments of the present disclosure further includes at least one misstep switch, at least one air leakage detection hole 686, a one-way portion, a first cleaning member, and a second cleaning member.

As shown in FIG. 1A, the cleaning device 1 includes two misstep switches, namely a misstep switch 680 and a misstep switch 681, the misstep switch 680 is arranged at a first end 683 of the cleaning device 1, the misstep switch 681 is arranged at a second end 682 of the cleaning device 1. For example, the misstep switch 680 or the misstep switch 681can be arranged at a third end 684 of the cleaning device 1. It can be seen from FIG. 1A that the first end 683, the second end 682, and the third end 684 of the cleaning device 1 can be arranged at any edge position or corner position on the lower shell body 100 in the cleaning device 1, so that it is easier to detect a movement state of the cleaning device 1. Each misstep switch in the cleaning device 1 is configured to detect the moving position information of the cleaning device 1, and feed back the moving position information to the cleaning device, thereby controlling the movement state of the cleaning device 1 to prevent the cleaning device 1 from moving outside a region to be cleaned.

Referring to FIG. 1A and FIG. 2, at least one air leakage detection hole 686 is arranged in a second region 687 of the second module 640 close to the second end 682 or in a first region (not shown) of the second module 640 close to the first end 683, configured to change and feed back the air pressure inside the cleaning device 1. The first region and the second region 687 are arranged symmetrically with respect to the first symmetry plane 679. For example, the second region 687 can be a region close to the misstep switch 681, which is easy to change the air pressure of the air chamber 658 through the air leakage detection hole 686 in time when the cleaning device 1 moves beyond the surface to be cleaned, so as to serve as a reminder. Both the air leakage detection hole 686 and each misstep switch can perform a function of misstep detection, which can provide double protection for the cleaning device 1 against falling. For a working principle of the air leakage detection hole 686, please refer to the above-mentioned relevant description about the cooperation between the position limiting column 656 and the position limiting hole 658 as the air leakage hole, and will not be repeated here.

FIG. 9A is a schematic diagram of a water outlet range of a nozzle and an air outlet range of an air outlet opening in a cleaning device provided by an embodiment of the present disclosure. FIG. 9B is a schematic diagram of an air outlet opening provided by an embodiment of the present disclosure.

Referring to FIG. 9A and FIG. 9B, an air outlet opening 910 includes a one-way portion 911, and the one-way portion 911 is unidirectional in an air outlet direction M, that is, when the airflow flows out of the air outlet opening 910 in the air outlet direction M, the one-way portion 911 is opened, and when the airflow flows to the air outlet opening 910 against the air outlet direction M, the one-way portion 911 is closed, so the airflow cannot flow in from the air outlet opening 910 against the air outlet direction M. By arranging the one-way portion 911, the airflow can only flow out from the air outlet opening 910 in the air outlet direction M. Meanwhile, an air pressure inside the cleaning device can further be adjusted through the one-way portion 911.

For example, the one-way portion 911 may be a one-way valve. Of course, a form of the one-way portion 911 includes but is not limited thereto, and the one-way portion 911 may further be in other forms of structures.

Referring to FIG. 1A, FIG. 9A and FIG. 9B, a water outlet region of the nozzle 31 is A1, and an air outlet range of the air outlet opening 372 is A2. Because the air outlet opening 910 is provided with a one-way portion 911 inside, the airflow inside the cleaning device 1 will not be interfered by external airflow near the air outlet opening 910, the airflow flows out in one direction in an orderly manner, and the water outlet region A1 does not overlap with the air outlet range A2. Similarly, an air outlet range (not shown) of the air outlet opening 374 does not overlap with the water outlet region A1. Therefore, when the cleaning device 1 is running, water sprayed from the nozzle 31 can be prevented from entering the cleaning device 1 from the air inlet opening 204.

For example, the first cleaning member (not shown) can be bonded or clamped on a side of the first module 630 away from the lower shell body, and the second cleaning member (not shown) can be bonded or clamped on a side of the second module 640 away from the lower shell body. For example, the first cleaning member can be connected with a buckle that is correspondingly arranged on the first module 630 through a ring member; the second cleaning member can be connected with a buckle that is correspondingly arranged on the second module 640 through a ring member. For example, a fixing manner of the first cleaning member and the first module 630 may be the same as or different from that of the second cleaning member and the second module 640, which is not limited in the present disclosure.

For example, the first cleaning member and the second cleaning member may include a cleaning cloth or a cleaning brush, and other elements that can perform cleaning effects, and the present disclosure does not limit materials of the first cleaning member and the second cleaning member.

For example, as shown in FIG. 5A, in the cleaning device 1, an airflow adjusting structure 691 is provided at the air inlet covering 203 to guide the airflow entering into the air chamber 658, so that the airflow can enter into the fan 21 more smoothly.

For example, referring to FIG. 1A and FIG. 5B, in the cleaning device 1, the fan 21 is arranged on the middle cover 20, a shock absorbing member is arranged between the fan 21 and the middle cover 20, and a shock absorbing member is arranged between the fan 21 and the air outlet covering 22, which is used to play a shock absorbing role during an operation of the cleaning device 1, so as to protect the device. For example, the shock absorbing member may be a silicone ring, or any other element that can absorb shock, and the present disclosure is not limited thereto.

Referring to FIG. 1A, FIG. 1B and FIG. 1C, the battery pack 15 is arranged between the upper shell 30 and the lower shell assembly 10, and a rib 6152 on the upper shell 30 and a rib 6150 on the lower shell assembly 10 are used to fix the battery pack 15 without using any other fixing elements, which is possible to reduce a number of members of the cleaning device 1. For example, in some embodiments of the present disclosure, the battery pack 15 can further be placed outside the cleaning device 1 and electronically connected with a circuit board through wires to reduce a weight of the cleaning device 1.

What have been described above are only specific implementations of the present disclosure, the protection scope of the present disclosure is not limited thereto. The protection scope of the present disclosure should be based on the protection scope of the claims.

## Claims

1. A lower shell assembly, comprising:
a lower shell body, comprising a bottom portion and a side portion, the bottom portion comprising a first side and a second side which are opposite to each other, and the side portion being arranged around the bottom portion to form a cavity on the first side of the bottom portion;
a first module, installed on the second side of the bottom portion; and
a second module, installed on the second side of the bottom portion and spaced apart from the first module,
wherein the first module is configured to rotate around a rotating axis, the second module is configured to rotate around an axis perpendicular to the rotating axis, and the rotating axis extends in a direction from the first side to the second side.

2. The lower shell assembly according to claim 1, wherein the bottom portion comprises a first installing portion and a second installing portion, the first installing portion is a part of the bottom portion corresponding to the first module, the second installing portion is a part of the bottom portion corresponding to the second module, the side portion has a connecting surface away from the bottom portion, and a distance between the first installing portion and the connecting surface is smaller than a distance between the second installing portion and the connecting surface so that a height difference is provided between the first installing portion and the second installing portion.

3. The lower shell assembly according to claim 2, further comprising a covering shell portion, wherein the second module comprises a cleaning frame and a walking component, and the bottom portion comprises a first opening for installing the walking component and the covering shell portion, the covering shell portion is installed on the bottom portion and is configured to receive a part of the walking component, the cleaning frame has a second opening to avoid the walking component.

4. The lower shell assembly according to claim 3, wherein the cleaning frame is provided with double-layer ribs, and the bottom portion is provided with double-layer ribs, and the double-layer ribs on the cleaning frame are ring-shaped and form grooves therebetween, the double-layer ribs on the bottom portion are ring-shaped and form grooves therebetween,
the double-layer ribs on the cleaning frame and the double-layer ribs on the bottom portion are arranged in a manner of inserting with each other, and the bottom portion has an extension guide portion on the second side,
a height of the extension guide portion is smaller than a height of each of the double-layer ribs on the bottom portion so that a movement space is provided between the cleaning frame and the bottom portion and the cleaning frame has a movement amount in a height direction,
the double-layer ribs on the bottom portion and the double-layer ribs on the cleaning frame provide guide on direction for movement of the cleaning frame in the height direction,
the extension guide portion is located outside the double-layer ribs on the bottom portion, one of the double-layer ribs on the cleaning frame is arranged in the groove between the double-layer ribs on the bottom portion, and the other one of the double-layer ribs on the cleaning frame is arranged in a groove formed by the extension guide portion and a rib of the bottom portion close to the extension guide portion.

5. The lower shell assembly according to claim 4, wherein the bottom portion is further provided with a sealing rib on the second side, and the sealing rib is located inside the double-layer ribs on the bottom portion, the sealing rib and a rib of the double-layer ribs on the bottom portion close to the sealing rib form a receiving space for receiving a sealing member, and the height of the extension guide portion is smaller than a height of the sealing rib, the sealing member is configured to be compressible, a height of the sealing member is greater than the height of any one of the double-layer ribs, and is greater than the height of the sealing rib.

6. The lower shell assembly according to any one of claims 3-5, wherein the bottom portion is provided with a position limiting column on the second side, the cleaning frame is provided with a position limiting hole, and the position limiting column is matched with the position limiting hole so that the cleaning frame is connected with the bottom portion by a fastener;
the lower shell assembly further comprises a middle cover, the middle cover is located on the first side of the bottom portion and is installed on the bottom portion, an air chamber is provided between the middle cover and the bottom portion, and the second installing portion of the bottom portion has an adsorption hole, and a matching position between the position limiting column and the position limiting hole is communicated with the air chamber through the adsorption hole, so that the matching position between the position limiting column and the position limiting hole serves as an air leakage detection hole;
the lower shell assembly further comprises a negative pressure mechanism, and the negative pressure mechanism comprises at least one air chamber, an air inlet covering, at least one fan, and an air outlet covering, wherein the air outlet covering comprises at least two air outlet channels.

7. The lower shell assembly according to claim 6, wherein the air chamber comprises a first sub-air chamber corresponding to the first module, a second sub-air chamber corresponding to the second module, and an electronic control valve configured to selectively control an opening area of the first sub-air chamber or the second sub-air chamber.

8. The lower shell assembly according to claim 6, wherein the air chamber comprises a first sub-air chamber corresponding to the first module, a second sub-air chamber corresponding to the second module, a first electronic control valve, and a second electronic control valve, the first electronic control valve is configured to control the opening area of the first sub-air chamber; the second electronic control valve is configured to control the opening area of the second sub-air chamber.

9. The lower shell assembly according to any one of claims 3-8, further comprising a wiper strip arranged at the front portion and/or rear portion of the walking component in a walking direction.

10. The lower shell assembly according to any one of claims 3-9, wherein the walking component comprises at least one roller, and a cleaning portion is provided on at least one side of the roller to clean dirt on the roller.

11. The lower shell assembly according to any one of claims 3-10, wherein at least one sub-adsorption region is provided in the cleaning frame, wherein
each sub-adsorption region comprises at least one sub-adsorption hole, sub-adsorption holes are spaced apart from each other, and a cross-section of each sub-adsorption hole is smaller than an opening cross-section of the second opening.

12. The lower shell assembly according to any one of claims 1-11, wherein the first module and the second module are arranged side by side, and a rotation centerline of the first module is at a first symmetry plane of the second module, the first symmetry plane is a plane passing through a center of the second module in a direction perpendicular to a straight-line walking direction of the second module.

13. The lower shell assembly according to any one of claims 1-12, comprising a plurality of first modules and a plurality of second modules, wherein the plurality of first modules are spaced apart from each other, and the plurality of second modules are arranged side by side and arranged at intervals, and a rotation centerline of each first module does not overlap with a straight-line walking direction of each second module.

14. A cleaning device, comprising the lower shell assembly according to any one of claims 1-13.

15. The cleaning device according to claim 14, further comprising:
at least one misstep switch, arranged on at least one end portion of the cleaning device, configured to detect moving position information of the cleaning device, and feed back the moving position information to the cleaning device, so as to control walking state of the cleaning device;
and/or, at least one air leakage detection hole, arranged on at least one end portion of the cleaning device, configured to detect the moving position information of the cleaning device and feed back the moving position information to the cleaning device, so as to control the walking state of the cleaning device;
a one-way portion, the one-way portion being unidirectional in an air outlet direction of the cleaning device; and
a first cleaning member and a second cleaning member, the first cleaning member being connected with the first module and being arranged on a side of the first module away from the lower shell body, and the second cleaning member being connected with the second module and being arranged on a side of the second module away from the lower shell body.
